# EUROPÄISCHE PATENTANMELDUNG

(11) **EP 3 091 520 A1**
(43) Veröffentlichungstag der Anmeldung: **09.11.2016**
(21) Anmeldenummer: 15465514.6
(22) Anmeldetag: 07.05.2015
(51) Int. Cl.: G08G 1/00, G08G 1/16, B60W 30/165, B60W 30/18, G05D 1/02, G01C 21/34

(54) **VORRICHTUNG UND VERFAHREN ZUR STEUERUNG EINER AUTOMATISCHEN KOLONNENFAHRT**

(71) Anmelder: Continental Automotive GmbH, 30165 Hannover (DE)
(72) Erfinder: Podaru, Iulian, 300514 Timisoara (RO)
(74) Vertreter: Bobbert, Christiana

(57) **Zusammenfassung**

Die vorliegende Erfindung betrifft die Bildung und das Steuern einer automatischen Kolonnenfahrt mit einer Mehrzahl von Kraftfahrzeugen. Zunächst können Informationen über die Ziele der einzelnen Fahrzeuge ausgetauscht werden. Basierend auf diesen Informationen kann eine gemeinsame Teilstrecke für eine Mehrzahl von Kraftfahrzeugen ermittelt werden. Diese Gemeinsamkeit kann den Fahrzeugführern zur Bildung einer Fahrzeugkolonne bereitgestellt werden. Die Erfindung betrifft ferner das Steuern der Kolonnenfahrt, insbesondere ein Spurwechsels, sowie das Auflösen der Kolonne.

## Beschreibung

Die vorliegende Erfindung betrifft eine Vorrichtung und ein Verfahren zur Steuerung einer automatischen Kolonnenfahrt. Insbesondere betrifft die vorliegende Erfindung eine Vorrichtung ein Verfahren zum Bilden, Steuern und Auflösen einer Fahrzeugkolonne mit mindestens zwei Kraftfahrzeugen.

### Stand der Technik

Moderne Kraftfahrzeuge verfügen über eine Vielzahl von Assistenzsystemen. Beispielsweise können moderne Kraftfahrzeuge über eine automatische Distanzregelung (ADR), eine adaptive Geschwindigkeitsregelung (Adaptive Cruise Control = ACC), Spurhaltesysteme (Lane Keeping Assist = LKA) oder ein System zur Überwachung eines toten Winkels (Blind Spot Detection = BSD) verfügen. Derartige Fahrerassistenzsysteme (Advanced Driver Assistance Systems = ADAS) unterstützen den Führer eines Kraftfahrzeugs und bieten somit eine erhöhte Fahrsicherheit und einen gesteigerten Komfort. Der Fahrzeugführer wird dabei durch diese Assistenzsysteme unterstützt. Er muss dabei jedoch weiterhin stets die Verkehrsbedingungen und den Straßenzustand überwachen. Eine vollständige Entlastung des Fahrzeugführers für ein autonomes Fahren des Fahrzeugs können diese Assistenzsysteme gegenwärtig noch nicht bieten.

Insbesondere längere Fahrstrecken stellen für einen Fahrzeugführer jedoch eine große Belastung dar. Mit der Dauer der Fahrzeit kann die Konzentrationsfähigkeit des Fahrzeugführers sinken. Hierdurch steigt die Gefahr, dass der Fahrzeugführer eine gefährliche Situation nicht rechtzeitig erkennt, um geeignete Gegenmaßnahmen einzuleiten.

Es besteht daher ein Bedarf nach einer Vorrichtung und einem Verfahren, das ein zumindest teilweise autonomes Führen von Kraftfahrzeugen ermöglicht. Insbesondere besteht ein Bedarf nach einer Steuerung für eine automatische Kolonnenfahrt von Kraftfahrzeugen.

### Offenbarung der Erfindung

Hierzu schafft die vorliegende Erfindung gemäß einem ersten Aspekt eine Vorrichtung zur Steuerung einer automatischen Kolonnenfahrt mit mindestens zwei Fahrzeugen gemäß dem unabhängigen Patentanspruch 1.

Gemäß diesem ersten Aspekt ist eine Vorrichtung zur Steuerung einer automatischen Kolonnenfahrt eines ersten Fahrzeugs und mindestens eines weiteren Fahrzeugs vorgesehen. Die Vorrichtung umfasst eine Übertragungsvorrichtung und eine Auswertevorrichtung. Die Übertragungsvorrichtung kann dabei insbesondere in dem ersten Fahrzeug angeordnet sein. Dabei kann die Übertragungsvorrichtung dazu ausgelegt sein, Routeninformationen von dem weiteren Fahrzeug zu empfangen. Die Auswertevorrichtung kann ebenfalls in dem ersten Fahrzeug angeordnet sein. Insbesondere kann in die Auswertevorrichtung dazu ausgelegt sein, basierend auf den empfangenen Routeninformationen des weiteren Fahrzeugs und den in dem ersten Fahrzeug spezifizierten Routeninformationen des ersten Fahrzeugs eine gemeinsame Teilroute des ersten Fahrzeugs und das weitere Fahrzeugs zu ermitteln. Anschließend können Informationen über das weitere Fahrzeug ausgeben werden, wenn eine gemeinsame Teilroute ermittelt worden ist.

Gemäß einem weiteren Aspekt schafft die vorliegende Erfindung ein Verfahren zur Steuerung einer automatischen Kolonnenfahrt mit mindestens zwei Fahrzeugen gemäß dem unabhängigen Patentanspruch 9.

Gemäß diesem weiteren Aspekt schafft die vorliegende Erfindung ein Verfahren zur Steuerung einer automatischen Kolonnenfahrt einer Fahrzeugkolonne mit einem ersten Fahrzeug und mindestens einem weiteren Fahrzeug. Das Verfahren umfasst die Schritte des Bestimmens von Routeninformationen des ersten Fahrzeugs; des Empfangens von Routeninformationen des weiteren Fahrzeugs; des Ermittelns einer gemeinsamen Teilroute des ersten Fahrzeugs und des weiteren Fahrzeugs basierend auf den Routeninformationen des ersten Fahrzeugs und den Routeninformationen des weiteren Fahrzeugs; und des Ausgebens von Informationen über das weitere Fahrzeug in dem ersten Fahrzeug, wenn eine gemeinsame Teilroute des ersten Fahrzeugs und des weiteren Fahrzeugs ermittelt worden ist.

Der vorliegenden Erfindung liegt die Idee zu Grunde, für das Führen von Kraftfahrzeugen Fahrzeugkolonnen zu bilden. Haben mehrere Kraftfahrzeuge eine gemeinsame Route, oder zumindest ein gemeinsames Teilstück einer Route, so können die Kraftfahrzeuge durch Bilden einer Fahrzeugkolonne die gemeinsame Strecke besonders effizient zurücklegen. Mittels der in modernen Kraftfahrzeugen vorhandenen Fahrassistenzsysteme kann dabei das Fahren in der Fahrzeugkolonne zumindest für die dem Führungsfahrzeug folgenden Kraftfahrzeuge soweit automatisiert werden, dass für die dem Führungsfahrzeug folgenden Kraftfahrzeuge ein autonomes Fahren möglich wird. Die Fahrzeugführer der nachfolgenden Kraftfahrzeuge müssen somit während der Kolonnenfahrt nicht mehr selbstständig die Verkehrsbedingungen überwachen.

Für das Bilden einer solchen Fahrzeugkolonne aus mehreren Kraftfahrzeugen liegt der vorliegenden Erfindung dabei die Idee zu Grunde, dass die Kraftfahrzeuge Routeninformationen, wie zum Beispiel Informationen über die beabsichtigte Fahrstrecke oder das Fahrtziel, miteinander austauschen können. So kann zum Beispiel ein in einem Navigationssystem eingegebenes Fahrtziel mit dem Fahrtziel von Kraftfahrzeugen in der Umgebung abgeglichen werden. Wird dabei ein gemeinsames Fahrtziel oder zumindest eine gemeinsame Teilstrecke ermittelt, so kann daraufhin den Fahrzeugführern signalisiert werden, dass das Bilden einer Fahrzeugkolonne möglich ist. Sind mehrere Kraftfahrzeuge identifiziert, aus denen eine Fahrzeugkolonne gebildet werden kann, so können daraufhin die Fahrzeugführer entscheiden, ob sie an einer solchen Fahrzeugkolonne teilnehmen möchten oder nicht.

Für das Bilden der Fahrzeugkolonne können darüber hinaus den Fahrzeugführern die entsprechenden Informationen bereitgestellt werden, um die weiteren Kraftfahrzeuge zu identifizieren, aus denen eine Fahrzeugkolonne gebildet werden kann. Daraufhin ist es den einzelnen Fahrzeugführern möglich, aus den automatisch identifizierten Kraftfahrzeugen eine geeignete Fahrzeugkolonne zu bilden.

Auf diese Weise können durch den automatischen Abgleich der ausgesendeten bzw. empfangenen Informationen über die einzelnen Fahrrouten von Kraftfahrzeugen die Fahrzeugführer bei der Bildung einer Fahrzeugkolonne unterstützt werden. Anschließend ist unter Verwendung von ohnehin in den Kraftfahrzeugen vorhandenen Fahrerassistenzsystemen eine automatisierte Kolonnenfahrt möglich. Für eine automatisierte Kolonnenfahrt sind insbesondere wenig verzweigte Straßen, wie beispielsweise Autobahnen o.ä., vorteilhaft.

Weitere Ausführungsformen sind Gegenstand der Unteransprüche, wie sie nachfolgend beschreiben werden.

Gemäß einer Ausführungsform ist die Übertragungsvorrichtung der Vorrichtung zur Steuerung der Kolonnenfahrt ferner dazu ausgelegt, die in dem ersten Fahrzeug spezifizierten Routeninformationen auszusenden. Auf diese Weise können nicht nur Routeninformationen von anderen Fahrzeugen empfangen werden, sondern es ist auch möglich, die eigenen Routeninformationen an weitere Fahrzeuge zu übertragen. Somit ist ein bidirektionaler Datenaustausch der Routeninformationen mit Fahrzeugen in der Umgebung möglich.

Gemäß einer weiteren Ausführungsform umfassen die Routeninformationen des ersten Fahrzeugs und/oder die Routeninformationen des zweiten Fahrzeugs eine geographische Zielposition, eine Fahrstrecke, eine Fahrcharakteristik und/oder Spezifikationen des jeweiligen Fahrzeugs. Darüber hinaus sind auch jede Art von weiteren Informationen als Routeninformationen möglich, die dazu geeignet sind Gemeinsamkeiten in der Fahrstrecke sowie dem Fahrstil der einzelnen Fahrzeuge zu erkennen. Auch kann in den ausgetauschten Routeninformationen spezifiziert sein, ob das jeweilige Fahrzeug ein Führungsfahrzeug einer Fahrzeugkolonne sein möchte, oder ob das Fahrzeug vorzugsweise einem weiteren Fahrzeug einer Fahrzeugkolonne folgen möchte. Somit kann bei einem entsprechenden Abgleich der ausgetauschten Routeninformationen eine effiziente Abstimmung bei der Bildung von Fahrzeugkolonne erreicht werden.

Gemäß einer weiteren Ausführungsform umfasst die Vorrichtung zur Steuerung einer Kolonnenfahrt eine Spurwechselvorrichtung, die dazu ausgelegt ist, eine Anforderung für einen Wechsel einer Fahrspur einer Fahrzeugkolonne mit dem ersten Fahrzeug und dem weiteren Fahrzeug zu empfangen. Die Vorrichtung kann darüber hinaus ferner eine Detektorvorrichtung umfassen, die dazu ausgelegt ist, ein Objekt in der Fahrspur zu detektieren, auf die gewechselt werden soll. Dabei kann die Spurwechselvorrichtung den Spurwechsel dann freigeben, wenn die Detektorvorrichtung kein Objekt in der Fahrspur detektiert, auf die gewechselt werden soll. Auf diese Weise kann sichergestellt werden, dass für alle Fahrzeuge einer Fahrzeugkolonne ein gefahrloser Wechsel der Fahrspur möglich ist.

Gemäß einer weiteren Ausführungsform ist die Spurwechselvorrichtung dazu ausgelegt, einen Spurwechsel des ersten Fahrzeugs und des weiteren Fahrzeugs in der Fahrzeugkolonne gleichzeitig auszuführen. Somit kann ein synchroner Wechsel der Fahrspur für alle Fahrzeuge der Fahrzeugkolonne durchgeführt werden.

Gemäß einer weiteren Ausführungsform ist die Spurwechselvorrichtung dazu ausgelegt ist, den Spurwechsel der einzelnen Fahrzeuge der Fahrzeugkolonne mit dem ersten Fahrzeug und dem weiteren Fahrzeug zeitlich verzögert auszuführen. Das letzte Fahrzeug der Fahrzeugkolonne kann dabei den Spurwechsel als erstes ausführen.

Gemäß einer weiteren Ausführungsform der Vorrichtung zur Steuerung einer Kolonnenfahrt umfasst die Vorrichtung eine Signalisierungsvorrichtung. Die die Übertragungsvorrichtung kann dabei insbesondere dazu ausgelegt sein, eine Anforderung für eine Unterbrechung einer Fahrzeugkolonne zwischen dem ersten Fahrzeug und dem weiteren Fahrzeug zu empfangen. Ferner kann die Signalisierungsvorrichtung dazu ausgelegt sein, eine Signalisierung für eine Unterbrechung in der Fahrzeugkolonne auszugeben. Auf diese Weise kann der Erreichen eines relevanten Abbruchkriterium für die Kolonnenfahrt den jeweiligen Fahrzeugführern das Auflösen der Kolonnenfahrt und somit die Beendigung des autonomen Fahrens zur Kenntnis gebracht werden.

Gemäß einer weiteren Ausführungsform der Vorrichtung zur Steuerung einer Kolonnenfahrt umfasst die Vorrichtung eine Steuervorrichtung. Die Steuervorrichtung kann dazu ausgelegt sein, eine Geschwindigkeit des ersten Fahrzeugs oder des weiteren Fahrzeugs zu verringern, wenn eine vorbestimmte Zeitspanne nach der Signalisierung für eine Unterbrechung in der Fahrzeugkolonne verstrichen ist. Auf diese Weise kann bei der Beendigung der automatischen Kolonnenfahrt zur Steigerung der Fahrsicherheit die Geschwindigkeit automatisch abgesenkt werden. Insbesondere kann durch Reduzierung der Geschwindigkeit der nachfolgenden Fahrzeuge auch der Abstand zu den vorausfahrenden Fahrzeugen bei der Beendigung der Kolonnenfahrt vergrößert werden.

Gemäß einer weiteren Ausführungsform des Verfahrens zur Steuerung einer Kolonnenfahrt umfasst das Verfahren einen Schritt zum Bestimmen einer Reihenfolge in der Fahrzeugkolonne basierend auf den Routeninformationen des ersten Fahrzeugs und den Routeninformationen des weiteren Fahrzeugs. Auf diese Weise kann bereits bei der Bildung einer Fahrzeugkolonne die Reihenfolge der Fahrzeuge in der Fahrzeugkolonne auf den weiteren Fahrtverlauf angepasst werden. So kann beispielsweise das Fahrzeug, das die Fahrzeugkolonne als erstes wieder verlassen wird, an das Ende der Fahrzeugkolonne gesetzt werden. Insbesondere ist es auch möglich, in den Routeninformationen zu spezifizieren, welches Fahrzeug vorzugsweise das Führungsfahrzeug einer Kolonne sein möchte.

Gemäß einer weiteren Ausführungsform umfasst das Verfahren die Schritte des Empfangens eine Anforderung für einen Wechsel der Fahrspur einer Fahrzeugkolonne mit dem ersten Fahrzeug und dem weiteren Fahrzeug, nachdem aus dem ersten Fahrzeug und dem weiteren Fahrzeug eine Fahrzeugkolonne gebildet worden ist; des Detektierens eines Objekts in der Fahrspur, auf die gemäß der Anforderung für einen Wechsel der Fahrspur gewechselt werden soll, durch das erste Fahrzeug und das weitere Fahrzeug; und des Freigebens des Wechsels der Fahrspur, wenn in der Fahrspur, auf die gewechselt werden soll, kein Objekt worden ist.

Gemäß einer weiteren Ausführungsform wechselt das jeweils hintere Fahrzeug einer Fahrzeugkolonne mit dem ersten Fahrzeug und dem weiteren Fahrzeug die Fahrspur zuerst.

Gemäß einer weiteren Ausführungsform wechseln alle Fahrzeuge einer Fahrzeugkolonne mit dem ersten Fahrzeug und dem weiteren Fahrzeug die Fahrspur gleichzeitig.

Gemäß einer weiteren Ausführungsform umfasst das Verfahren ferner die Schritte des Empfangens eine Anforderung für eine Unterbrechung der Fahrzeugkolonne zwischen dem ersten Fahrzeug und dem weiteren Fahrzeug; und des Ausgebens einer Signalisierung für die Unterbrechung der Fahrzeugkolonne zwischen dem ersten Fahrzeug und dem weiteren Fahrzeug.

Gemäß einer weiteren Ausführungsform umfasst das Ausgeben der Signalisierung für die Unterbrechung eine optische, akustische und/oder haptische Signalisierung. Diese Weise kann einem Fahrzeugführer sicher das Ende der autonomen Kolonnenfahrt zur Kenntnis gebracht werden.

Weitere Vorteile und Ausführungsformen der vorliegenden Erfindung ergeben sich aus der nachfolgenden Beschreibung unter Bezug auf die beigefügten Zeichnungen.

Dabei zeigen:
Figur 1: eine schematische Darstellung von Kraftfahrzeugen mit einer Vorrichtung zur Steuerung einer automatischen Kolonnenfahrt gemäß einer Ausführungsform;
Figur 2: eine schematische Darstellung von Kraftfahrzeugen während einer Kolonnenfahrt gemäß einer Ausführungsform;
Figur 3: eine schematische Darstellung einer Fahrzeugkolonne vor einem Spurwechsel gemäß einer Ausführungsform;
Figur 4: eine schematische Darstellung einer Fahrzeugkolonne während eines Spurwechsels gemäß einer Ausführungsform;
Figur 5: eine schematische Darstellung einer Fahrzeugkolonne während eines Spurwechsels gemäß einer weiteren Ausführungsform; und
Figur 6: ein Ablaufdiagramm für ein Verfahren zur Steuerung einer Kolonnenfahrt, wie es einer Ausführungsform zugrunde liegt.

### Beschreibung von Ausführungsformen

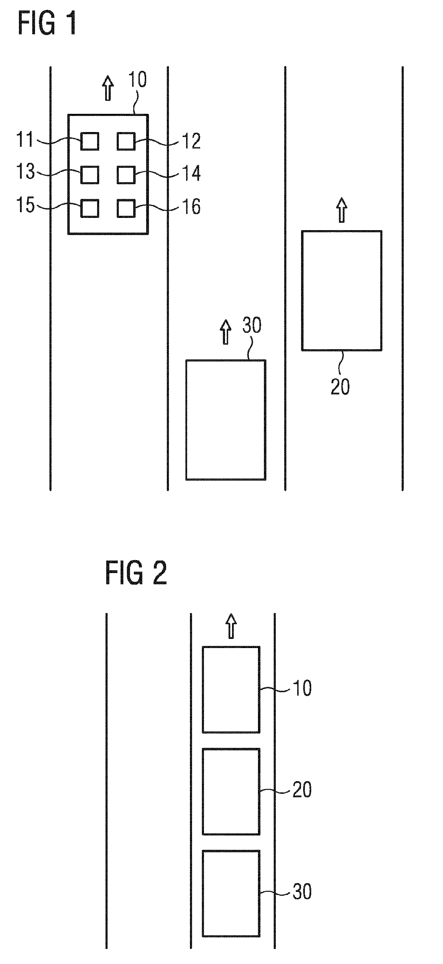

Figur 1 zeigt schematisch drei Kraftfahrzeuge 10, 20 und 30. Bei den Kraftfahrzeugen 10, 20 und 30 kann es sich dabei um beliebige Kraftfahrzeuge handeln. Insbesondere sind sowohl Personenkraftwagen (PKW) als auch Lastkraftwagen (LKW) möglich. Weitere Kraftfahrzeuge sind ebenso möglich. Die gewählte Anzahl von 3 Fahrzeugen dient hier nur dem besseren Verständnis und soll keine Beschränkung der vorliegenden Erfindung darstellen. Auch die Eigenschaft, dass sich die drei Fahrzeuge auf unterschiedlichen Fahrspuren fortbewegen ist nur beispielhaft zu verstehen. Auch können sich mehrere oder alle Fahrzeuge auf der gleichen Fahrspur fortbewegen. Auch sind für die vorliegende Erfindung keine Straßen mit mehr als einer Fahrspur zwingend erforderlich. Ebenso kann die vorliegende Erfindung auch auf Straßen mit nur einer Fahrspur für eine Fahrtrichtung realisiert werden.

Die Kraftfahrzeuge 10, 20 und 30 umfassen dabei, wie hier beispielhaft nur für das erste Kraftfahrzeug 10 dargestellt, eine Übertragungsvorrichtung 11 und eine Auswertevorrichtung 12. Ferner können die Kraftfahrzeuge 10, 20 und 30 auch eine Spurwechselvorrichtung 13 und eine Detektorvorrichtung 14 umfassen. Darüber hinaus sind auch eine Signalisierungsvorrichtung 15 und gegebenenfalls eine Steuervorrichtung 16 möglich. Die einzelnen vorgenannten Vorrichtungen werden im nachfolgenden noch näher erläutert. Weiterhin können die Fahrzeuge 10, 20 und 30 über Komponenten eines Fahrassistenzsystem (ADAS) verfügen. Solche Komponenten sind beispielsweise ein adaptives Geschwindigkeits-Regelsystem, ein Spurhalteassistent oder ein System zur Detektion von toten Winkeln. Weitere Komponenten für Fahrassistenzsysteme sind darüber hinaus ebenso möglich. Insbesondere können die Fahrzeuge 10, 20 und 30 über eine geeignete Sensorik verfügen, die Fahrzeuge und/oder weitere Objekte in der Umgebung der Fahrzeuge 10, 20 und 30 detektieren kann. Solche Systeme können beispielsweise auf Basis von optischen Bildern, Ultraschallsignalen oder Radarechos funktionieren. Aber auch weitere Detektorvorrichtungen sind ebenso möglich. Darüber hinaus können die Fahrzeuge 10,20 und 30 beispielsweise über Komponenten eines Navigationssystems verfügen. In einem solchen Navigationssystem kann ein Fahrzeugführer beispielsweise sein Reiseziel eingeben. Daraufhin berechnet das Navigationssystem eine geeignete Fahrtroute, um dieses Ziel zu erreichen. Gegebenenfalls kann der Fahrzeugführer darüber hinaus auch weitere Spezifikationen für die Fahrtroute eingeben. Solche weiteren Spezifikationen können zum Beispiel den persönlichen Fahrstil des Fahrzeugführers berücksichtigen. Insbesondere ist es möglich Beschränkungen zur Reisegeschwindigkeit, Einschränkungen über die zu verwendenden Straßentypen, Zwischenziele oder ähnliches zu spezifizieren. Diese Angabe über das Reiseziel bzw. den Fahrstil des Fahrzeugführers können jedoch grundsätzlich auch von einer geeigneten weiteren Komponente in dem jeweiligen Fahrzeugs 10, 20 und 30 erfasst und gespeichert werden. Weiterhin können die Fahrzeugführer in den Kraftfahrzeugen 10,20 und 30 spezifizieren, ob sie die Teilnahme an einer Fahrzeugkolonne während der Fahrt wünschen oder nicht. Insbesondere können die einzelnen Fahrzeugführer spezifizieren, ob sie als Führungsfahrzeug in einer Fahrzeugkolonne teilnehmen möchten, oder ob sie während der Fahrt einem Führungsfahrzeug folgen möchten. Dabei können die einzelnen Fahrzeugführer in ihren jeweiligen Fahrzeugen 10, 20 und 30 auch spezifizieren, ob die von ihnen gemachten Angaben weiteren Fahrzeugen mitgeteilt werden dürfen, oder ob eine Weitergabe dieser Angaben unterbunden werden soll.

Die zuvor beschriebenen Angaben der einzelnen Fahrzeugführer zu Reiseziel bzw. Fahrstil und Präferenzen sowie weitere gegebenenfalls fahrzeugspezifische Daten, wie zum Beispiel Kennzeichen des Fahrzeugs, Fahrzeugtyp, Farbe des Fahrzeugs, o.ä., werden im Folgenden gesammelt als Routeninformationen bezeichnet. Diese Routeninformationen können zunächst in einem Speicher (nicht dargestellt) des jeweiligen Fahrzeugs 10, 20 und 30 gespeichert werden. Hat der jeweilige Fahrzeugführer die Weitergabe der Routeninformationen freigegeben, so können diese Routeninformationen mittels einer drahtlosen Kommunikation an Fahrzeuge in der Umgebung ausgesendet werden. Hierzu kann zum Beispiel die Übertragungsvorrichtung 11 die freigegebenen Routeninformationen periodisch oder gegebenenfalls auf Anforderung aussenden. Beispielsweise können die Routeninformationen durch die Übertragungsvorrichtung 11 als Funksignale ausgesendet werden. Die Reichweite der ausgesendeten Funksignale kann dabei auf wenige Meter, beispielsweise 50 m oder 100 m begrenzt sein. Die Funksignale können dabei beispielsweise mittels eines WLAN-Standards ausgesendet werden. Auch eine Aussendung mittels Bluetooth oder eines anderen konventionellen Funkstandards ist möglich. Ferner ist auch die Verwendung eines speziellen Funkstandards zur Kommunikation zwischen Fahrzeugen möglich. Insbesondere kann hierzu eine speziell angepasste Car-to-Car- Kommunikation vorgesehen werden.

Die Übertragungsvorrichtung 11 kann darüber hinaus auch Routeninformationen von weiteren Fahrzeugen 10, 20 und 30 in der Umgebung empfangen. Gegebenenfalls kann die Übertragungsvorrichtung 11 eines Fahrzeugs 10, 20 und 30 auch zunächst ein Anforderungssignal aussenden, worauf Fahrzeuge in der Umgebung ihrerseits die verfügbaren und gegebenenfalls freigegebenen Routeninformationen aussenden, die daraufhin von der Übertragungsvorrichtung 11 empfangen werden können.

Nachdem eine Übertragungsvorrichtung 11 in einem ersten Fahrzeug 10 Routeninformationen von einem weiteren Fahrzeug 20 oder 30 in der Umgebung empfangen hat, kann es die eigenen Routeninformationen mit den empfangenen Routeninformationen vergleichen. Beispielsweise kann das Fahrzeug 10 hierzu in der Auswertevorrichtung 12 das eigene Fahrtziel bzw. die eigene Fahrtroute mit dem Fahrtziel bzw. der Fahrtroute aus den empfangenen Routeninformationen vergleichen. Stellt die Auswertevorrichtung 12 dabei fest, dass das erste Fahrzeug 10 und das weitere Fahrzeug 20 oder 30, von dem die Routeninformationen empfangen worden sind, im weiteren Fahrtverlauf zumindest teilweise eine gemeinsame Teilstrecke (Teilroute) zurücklegen werden, so ist eine Kolonnenfahrt möglich. Dabei kann auch erst dann eine gemeinsame Kolonnenfahrt zugelassen werden, wenn die gemeinsame Teilstrecke eine zuvor bestimmende Länge überschreitet. Somit kann vermieden werden, dass nur für unverhältnismäßig kurze Teilstrecken eine Fahrzeugkolonne gebildet wird. Darüber hinaus können aus noch weitere Bedingungen vorgegeben und überprüft werden, die für die Bildung einer Fahrzeugkolonne erfüllt sein müssen.

Ferner kann die Zulässigkeit bzw. die Möglichkeit für die Bildung einer Fahrzeugkolonne auch noch durch weitere Parameter beschränkt werden. So können beispielsweise Spezifikationen des Fahrstils, insbesondere Einschränkungen in der minimalen bzw. maximalen Reisegeschwindigkeit berücksichtigt werden. Darüber hinaus können die Routeninformationen auch dahingehend analysiert werden, dass eines der Fahrzeuge 10 , 20 und 30 eine Führungsfahrzeug bilden sollte, während die verbleibenden Fahrzeuge 10, 20 und 30 dem Führungsfahrzeug folgen sollten.

Basierend auf den Routeninformationen kann daraufhin auch gegebenenfalls eine Reihenfolge ermittelt werden, in der sich die Fahrzeuge 10, 20 und 30 zu einer Fahrzeugkolonne zusammenschließen sollten. Neben der Präferenz in den Routeninformationen für das Führungsfahrzeug kann dabei beispielsweise das Fahrtziel der einzelnen Fahrzeuge 10, 20 und 30 ausgewertet werden. Insbesondere kann beispielsweise das Fahrzeug als letztes in der Kolonne angeordnet werden, dass die Kolonne voraussichtlich als erstes wieder verlassen wird. Aber auch beliebige weitere Vorgaben für die Bildung einer Reihenfolge einer Fahrzeugkolonne sind darüber hinaus ebenso möglich.

Auch sollten die Straßen für die gemeinsame Teilstrecke, in der eine Kolonnenfahrt ermöglicht werden soll, vorbestimmte Voraussetzungen erfüllen. Insbesondere sind hierzu Autobahnen oder ähnliche Straßen sehr gut geeignet. Solche Straßen, die für eine Kolonnenfahrt besonders geeignet sind, weisen in der Regel keine Kreuzungen auf. Darüber hinaus sind nur sehr wenige Verzweigungen vorhanden.

Im Folgenden soll die Bildung einer Fahrzeugkolonne an einem Beispiel veranschaulicht werden. Auf einer Autobahn nahe Nürnberg fährt ein erstes Fahrzeug 10 mit Fahrtziel München. Der Fahrer des ersten Fahrzeugs 10 bevorzugt eine Fahrt als Führungsfahrzeug. Ein weiteres Fahrzeug 20 in der Nähe des ersten Fahrzeugs 10 hat das Fahrtziel Ingolstadt. Die beiden Fahrzeuge 10 und 20 tauschen ihre Routeninformationen wie zuvor beschrieben aus. Dabei erkennen die Fahrzeuge 10 und 20 zunächst eine gemeinsame Teilstrecke von Nürnberg bis Ingolstadt. Der Fahrer des ersten Fahrzeugs 10 erhält daraufhin eine Information, dass weitere Fahrzeuge vorhanden sind, die seinem Fahrzeug gerne folgen möchten. Daraufhin kann der Fahrzeugführer des ersten Fahrzeugs 10 eine solche Kolonnenfahrt freigeben. Diese Freigabe kann von dem ersten Fahrzeug 10 an das weitere Fahrzeug 20 übertragen werden. Nachdem der Fahrzeugführer des ersten Fahrzeugs 10 eine Kolonnenfahrt freigegeben hat, werden dem Fahrzeugführer des weiteren Fahrzeugs 20 Informationen über das Führungsfahrzeug 10 angezeigt. Beispielsweise kann dem Fahrzeugführer das Kennzeichen des in der zu bildenden Fahrzeugkolonne vorausfahrenden Fahrzeugs 10 angezeigt werden. Gegebenenfalls kann dem Fahrzeugführer den nachfolgenden Fahrzeugs 20 auch die Farbe und/oder der Fahrzeugtyp des vorausfahrenden Fahrzeugs 10 angezeigt werden, um eine Identifizierung des vorausfahrenden Fahrzeugs 10 zu erleichtern. Der Fahrzeugführer des weiteren Fahrzeugs 20 kann daraufhin sein Fahrzeug unmittelbar hinter das Führungsfahrzeug 10 steuern. Sind die Voraussetzungen, wie Abstand, Geschwindigkeit, etc. für eine Kolonnenfahrt erfüllt, so kann im weiteren Verlauf das weitere Fahrzeug 20 vollständig durch diese Systeme des Fahrerassistenzsystems in dem weiteren Fahrzeug 20 gesteuert werden. Gegebenenfalls kann hierzu noch eine Bestätigung des Fahrzeugführers des vorausfahrenden Fahrzeugs 10 und/oder des nachfolgenden Fahrzeugs 20 erfolgen. Das weitere Fahrzeug 20 kann anschließend eine vollständig autonome Fahrt durchführen.

Im weiteren Verlauf begegnet die Kolonne aus den beiden Fahrzeugen 10 und 20 einem dritten Fahrzeug 30. Dieses dritte Fahrzeug 30 beabsichtigt eine Fahrt in die Nähe von Rosenheim. Das dritte Fahrzeug 30 kann somit nach Austausch der Routeninformationen ebenfalls feststellen, dass eine gemeinsame Teilstrecke in der Fahrtstrecke vorhanden ist (mindestens bis Ingolstadt). Daraufhin kann in das dritte Fahrzeug 30 sein Interesse an der Bildung einer Fahrzeugkolonne signalisieren. Daraufhin erfolgt zunächst eine Analyse der Kolonnenlängen. Ist eine zuvor vorgegebene maximale Anzahl von Fahrzeugen für eine Fahrzeugkolonne bereits erreicht, so sind keine weiteren Fahrzeuge in der Fahrzeugkolonne zulässig. Ist dagegen eine maximale Anzahl von Fahrzeugen in der Fahrzeugkolonne noch nicht erreicht, so kann ein weiteres Fahrzeug in der Fahrzeugkolonne zugelassen werden. Die maximale Anzahl von Fahrzeugen der Fahrzeugkolonne kann dabei entweder systembedingt vorgegeben werden, oder die maximale Anzahl von Fahrzeugen der Fahrzeugkolonne wird durch den Fahrzeugführer des Führungsfahrzeuges vorgegeben. Da beispielsweise mit zunehmender Kolonnenlängen ein Spurwechsel für einen Überholvorgang oder ähnliches schwieriger wird, kann der Fahrzeugführer des Führungsfahrzeugs die maximale Kolonnenlänge begrenzen. Die maximale Kolonnenlänge kann beispielsweise 5 oder 6 Fahrzeuge betragen.

Sind jedoch alle Bedingungen für weitere Fahrzeug in der Fahrzeugkolonne erfüllt, so werden dem Fahrzeugführer des dritten Fahrzeugs 30 die Informationen über das letzte Fahrzeug der Fahrzeugkolonne, also Informationen über das weitere Fahrzeug 20, bereitgestellt. Beispielsweise kann an einem geeigneten Display das Kennzeichen des weiteren Fahrzeugs 20 angezeigt werden. Ferner kann auch die Farbe des Fahrzeugs und/oder der Fahrzeugtyp ausgegeben werden. Auch die Ausgabe weiterer Informationen, wie beispielsweise die gemeinsame Fahrtroute oder ein bevorzugter Fahrstil des Führungsfahrzeugs 10 können gegebenenfalls angezeigt werden.

Figur 2 zeigt eine schematische Darstellung einer Fahrzeugkolonne, wie sie nach Bildung der zuvor beschriebenen Fahrzeugkolonne aus den drei Fahrzeugen 10, 20 und 30 zustande gekommen ist.

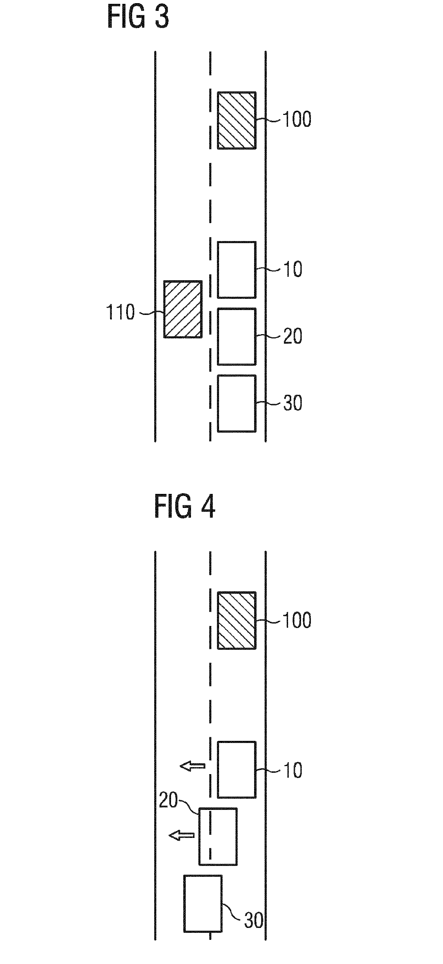

Erreicht die Fahrzeugkolonne ein vorausfahrendes langsameres Fahrzeug 100, wie dies beispielsweise in Figur 3 dargestellt ist, so kann dieses Fahrzeug 100 gegebenenfalls durch einen Spurwechsel überholt werden. Hierzu wird zunächst durch den Fahrzeugführer des ersten Fahrzeugs 10 in der Kolonne der Wunsch für einen Spurwechsel signalisiert. Beispielsweise kann durch eine Spurwechselvorrichtung 13 zunächst eine Anforderung für den Wechsel einer Fahrspur in der Fahrzeugkolonne an die weiteren Fahrzeuge 20 und 30 der Fahrzeugkolonne weitergegeben werden. Die Spurwechselvorrichtungen 13 der weiteren Fahrzeuge 20 und 30 empfangen diese Anforderung für einen Spurwechsel. Beispielsweise kann der Austausch der Spurwechselanforderung auch mittels der Übertragungsvorrichtung 11 erfolgen. Daraufhin wird in den Fahrzeugen 10, 20 und 30 jeweils der seitliche Bereich neben dem Fahrzeug überprüft, auf den während des Spurwechsels gewechselt werden soll. Beispielsweise kann durch eine Detektorvorrichtung 14 in den Fahrzeugen 10, 20 und 30 jeweils die Fahrspur überprüft werden, auf die gewechselt werden soll. Wird dabei auf der Fahrspur, auf die gewechselt werden soll, ein Objekt, beispielsweise ein weiteres Fahrzeug 110 oder ähnliches, detektiert, so wird zunächst der Spurwechsel unterbunden. Ist die Fahrspur, auf die gewechselt werden soll, frei, so wird der Spurwechsels freigegeben.

Wie in Figur 4 dargestellt, kann anschließend die Fahrzeugkolonne auf die gewünschte Fahrspur wechseln. Hierzu kann beispielsweise zunächst mit dem Spurwechsel durch das letzte (hinterste) Fahrzeuge 30 begonnenen werden. Anschließend folgen nach und nach alle weiteren Fahrzeuge 20 und 10, bis zuletzt auch das Führungsfahrzeug 10 die Fahrspur gewechselt hat. Auf diese Weise kann sichergestellt werden, dass während des Spurwechsels nicht von hinten ein schnelleres Fahrzeug in die Fahrzeugkolonne eindringt.

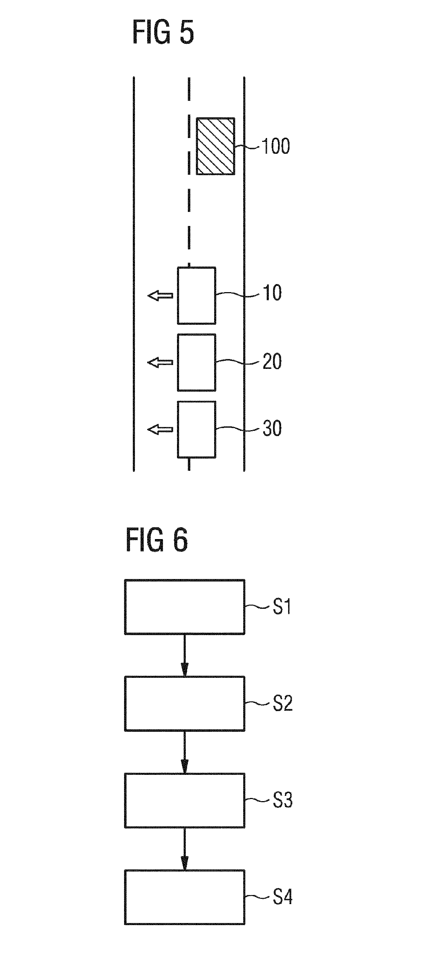

Alternativ können auch alle Fahrzeuge 10, 20 und 30 der Fahrzeugkolonne den Spurwechsel gleichzeitig durchführen. Dies ist beispielsweise in Figur 5 dargestellt.

Hat eines der Fahrzeuge 10, 20 und 30 sein Fahrtziel erreicht bzw. ist die gemeinsame Teilstrecke zumindest eines der Fahrzeuge 10, 20 und 30 der Fahrzeugkolonne erreicht, so verlässt dieses Fahrzeug die Fahrzeugkolonne. Hierzu kann den Fahrzeugführern der beteiligten Fahrzeuge 10, 20 und 30 der Fahrzeugkolonne zunächst das Auflösen bzw. eine Unterbrechung in der Fahrzeugkolonne signalisiert werden. Beispielsweise kann den Fahrzeugführern durch ein optisches, akustisches und/oder haptisches Signal eine bevorstehende Unterbrechung bzw. Auflösung der Fahrzeugkolonne angezeigt werden. Die Signalisierung kann beispielsweise mit einer geeigneten Signalisierungsvorrichtung 15 erfolgen. Somit wird den Fahrzeugführern in der dem Führungsfahrzeug 10 nachfolgender Fahrzeuge 20 und 30 angezeigt, dass das autarke Fahren beendet wird und die Fahrzeugführer nun wieder eigenständig ihre Fahrzeuge 20 und 30 führen müssen. Wird dabei detektiert, dass die jeweiligen Fahrzeugführer der Fahrzeuge 20 und 30 dies zur Kenntnis genommen haben und ihre Fahrzeuge nun wieder eigenständig führen, so wird das autarke Fahren beendet. Andernfalls kann die Geschwindigkeit der Fahrzeuge 20 und 30 automatisch verringert werden. Beispielsweise kann hierzu die Steuervorrichtung 16 in geeigneter Weise in die Regelung der Fahrzeuggeschwindigkeit eingreifen. Hierdurch erhöht sich der Abstand zwischen den einzelnen Fahrzeugen. Beispielsweise kann die automatische Verringerung der Geschwindigkeit erfolgen, wenn eine vorbestimmte Zeitspanne nach Signalisierung des Endes der Fahrzeugkolonne kein manuelles Eingreifen der Fahrzeugführer detektiert worden ist.

Wird beispielsweise in dem voraufgegangenen Beispiel aus der Fahrzeugkolonne der Fahrzeuge nach Ingolstadt, München und Rosenheim zunächst das erste Etappenziel Ingolstadt erreicht, so wird dabei zunächst das zweite Fahrzeug 20 (das mittlere Fahrzeug der Fahrzeugkolonne) die Fahrzeugkolonne verlassen. Hierzu wird zunächst der Abstand zwischen einzelnen Fahrzeugen 10, 20 und 30 vergrößert. Dies erfolgt beispielsweise durch eigenständiges Eingreifen der jeweiligen Fahrzeugführer in den Fahrzeugen 20 und 30. Erfolgt jedoch innerhalb einer vorbestimmten Zeitspanne kein manuelles Eingreifen, so kann die Geschwindigkeit der dem Führungsfahrzeug 10 folgenden Fahrzeuge 20 und 30 auch automatisch verringert werden.

Nachdem das Fahrzeug 20 mit Fahrziel Ingolstadt die Fahrzeugkolonne verlassen hat, kann anschließend aus dem Führungsfahrzeug 10 nach München und dem dritten Fahrzeug 30 nach Rosenheim erneut eine Fahrzeugkolonne gebildet werden.

Darüber hinaus kann die Kolonne selbstverständlich auch jederzeit durch eine manuelle Interaktion eines Fahrzeugführers beendet werden. Greift beispielsweise einer der Fahrzeugführer eines der dem Führungsfahrzeug 10 folgenden Fahrzeuge 20 bzw. 30 aktiv in das Fahrverhalten seines Fahrzeugs ein, so kann das autarke Fahren ebenfalls beendet werden.

Weiterhin ist es auch möglich, dass aufgrund der unterschiedlichen Leistungen der Fahrzeuge 10, 20 und 30 das Führungsfahrzeug 10 beispielsweise an einer Steigung eine Geschwindigkeit aufweist, die von den nachfolgenden Fahrzeuge 20 bzw. 30 nicht erreicht werden kann. In diesem Fall kann die Fahrzeugkolonne ebenfalls unterbrochen werden und den Fahrzeugführern kann eine entsprechende Signalisierung ausgegeben werden. Alternativ ist es auch möglich, dem Fahrzeugführer des Führungsfahrzeugs 10 einen Hinweis auf die geringere Leistung der nachfolgenden Fahrzeuge 20 und 30 zu geben, so dass der Fahrzeugführer des Führungsfahrzeugs 10 seine Geschwindigkeit reduziert.

Figur 6 zeigt eine schematische Darstellung eines Ablaufdiagramms, wie es einem Verfahren zur Steuerung einer Kolonnenfahrt gemäß einer Ausführungsform zugrunde liegt. In Schritt S1 werden zunächst Routeninformationen eines ersten Fahrzeugs 10 bestimmt. In Schritt S2 werden Routeninformationen von einem weiteren Fahrzeug 20 empfangen. Daraufhin wird in Schritt S3 eine gemeinsame Teilroute des ersten Fahrzeugs 10 und des weiteren Fahrzeugs 20 ermittelt. Die Ermittlungen der gemeinsamen Teilroute kann basierend auf den Routeninformationen des ersten Fahrzeugs 10 und den Routeninformationen des weiteren Fahrzeugs 20 ermittelt werden. Wenn eine gemeinsame Teilroute des ersten Fahrzeugs 10 und des weiteren Fahrzeugs 20 ermittelt worden ist, werden anschließend in Schritt S4 Informationen über das weitere Fahrzeug in dem ersten Fahrzeug ausgegeben.

Das Verfahren kann ferner auch noch einen Schritt umfassen, in dem eine Reihenfolge der Fahrzeuge 10, 20 und 30 bestimmt wird, in welcher die Fahrzeuge 10, 20 und 30 in einer Fahrzeugkolonne angeordnet werden wollen.

Weiterhin kann das Verfahren auch einen Schritt zum Empfangen eine Anforderung für einen Wechsel der Fahrspur einer Fahrzeugkolonne umfassen. Nach dem Empfangen eine solche Anforderung zum Wechsel der Fahrspur kann zunächst durch alle Fahrzeuge 10, 20 und 30 die Fahrspur, auf die gewechselt werden soll, überprüft werden. Hierzu kann ein Objekt in der Fahrspur, auf die gemäß der Anforderung für den Wechsel der Fahrspur gewechselt werden soll, detektiert werden. Wird dabei ein solches Objekt, beispielsweise ein weiteres Fahrzeug 110, detektiert, so wird kein Wechsel der Fahrspur durchgeführt bzw. der Wechsel der Fahrspur wird verzögert, bis kein Objekt detektiert wird. Wird kein Objekt auf der Fahrspur detektiert, auf die gewechselt werden soll, so kann der Wechsel der Fahrspur freigegeben werden. Nachdem in der Wechsel der Fahrspur freigegeben worden ist, können entweder alle Fahrzeuge 10, 20 und 30 gleichzeitig die Fahrspur wechseln. Alternativ ist es auch möglich, dass die Fahrzeuge nacheinander zeitliche leicht verzögert die Fahrspur wechseln. Insbesondere kann dabei das letzte (hinterste) Fahrzeug 30 der Fahrzeugkolonne als erstes mit dem Wechsel der Fahrspur beginnen. Anschließend folgen nach und nach dem weiteren Fahrzeuge 10 und 20, bis zuletzt auch das Führungsfahrzeug 10 die Fahrspur gewechselt hat.

Ferner kann das Verfahren auch einen Schritt zum Empfangen eine Anforderung für eine Unterbrechung der Fahrzeugkolonne umfassen. Eine solche Anforderung für das Unterbrechen der Fahrzeugkolonne kann beispielsweise manuell durch einen der Fahrzeugführer der Fahrzeuge 10, 20 und 30 initiiert werden. Ferner kann eine Unterbrechung der Fahrzeugkolonne auch durch das manuelle Eingreifen eines Fahrzeugführers der dem Führungsfahrzeug 10 nachfolgenden Fahrzeuge 20 und 30 in das autonome Fahren erfolgen. Ebenso kann rechtzeitig vor dem Erreichen des Endes der gemeinsamen Teilstrecke die Fahrzeugkolonne aufgelöst werden. Insbesondere kann zumindest das Fahrzeug aus der Fahrzeugkolonne ausscheren, dessen Fahrtziel erreicht ist bzw. dessen Teilstrecke endet. Beispielsweise kann eine vorbestimmte Zeit bzw. eine vorbestimmte Strecke vor Erreichen der gemeinsamen Teilstrecke eine Unterbrechung der Fahrzeugkolonne eingeleitet werden.

Zusammenfassend betrifft die vorliegende Erfindung die Bildung und das Steuern einer automatischen Kolonnenfahrt mit einer Mehrzahl von Kraftfahrzeugen. Zunächst können Informationen über die Ziele der einzelnen Fahrzeuge ausgetauscht werden. Basierend auf diesen Informationen kann eine gemeinsame Teilstrecke für eine Mehrzahl von Kraftfahrzeugen ermittelt werden. Diese Gemeinsamkeit kann den Fahrzeugführern zur Bildung einer Fahrzeugkolonne bereitgestellt werden. Die Erfindung betrifft ferner das Steuern der Kolonnenfahrt, insbesondere ein Spurwechsels, sowie das Auflösen der Kolonne.

## Patentansprüche

1. Vorrichtung zur Steuerung einer automatischen Kolonnenfahrt eines ersten Fahrzeugs (10) und mindestens eines weiteren Fahrzeugs (20), umfassend:
einer Übertragungsvorrichtung (11), die in dem ersten Fahrzeug (10) angeordnet ist und die dazu ausgelegt ist, Routeninformationen von dem weiteren Fahrzeug (20) zu empfangen;
einer Auswertevorrichtung (12), die in den ersten Fahrzeug angeordnet ist und die dazu ausgelegt ist, basierend auf den empfangenen Routeninformationen des weiteren Fahrzeugs (20) und in dem ersten Fahrzeug spezifizierten Routeninformationen des ersten Fahrzeugs eine gemeinsame Teilroute des ersten Fahrzeugs (10) und das weitere Fahrzeugs (20) zu ermitteln und Informationen über das weitere Fahrzeug (20) auszugeben, wenn eine gemeinsame Teilroute ermittelt worden ist.

2. Vorrichtung nach Anspruch 1, wobei die Übertragungsvorrichtung (11) ferner dazu ausgelegt ist, die in dem ersten Fahrzeug (10) spezifizierten Routeninformationen auszusenden.

3. Vorrichtung nach einem der Ansprüche 1 oder 2, wobei die Routeninformationen des ersten Fahrzeugs (10) und/oder die Routeninformationen des zweiten Fahrzeugs (20) eine geographische Zielposition, eine Fahrstrecke, eine Fahrcharakteristik und/oder Spezifikationen des jeweiligen Fahrzeugs umfassen.

4. Vorrichtung nach einem der Ansprüche 1 bis 3, ferner umfassend:
eine Spurwechselvorrichtung (13), die dazu ausgelegt ist, einen Anforderung für einen Wechsel einer Fahrspur einer Kolonne mit dem ersten Fahrzeug und dem weiteren Fahrzeug zu empfangen;
eine Detektorvorrichtung (14), die dazu ausgelegt ist, ein Objekt in der Fahrspur zu detektieren, auf die gewechselt werden soll;
wobei die Spurwechselvorrichtung (13) den Spurwechsel freigibt, wenn die Detektorvorrichtung (14) kein Objekt in der Fahrspur detektiert, auf die gewechselt werden soll.

5. Vorrichtung nach Anspruch 4, wobei die Spurwechselvorrichtung (13) ferner dazu ausgelegt ist, einen Spurwechsel des ersten Fahrzeugs (10) und des weiteren Fahrzeugs (20) in der Fahrzeugkolonne gleichzeitig auszuführen.

6. Vorrichtung nach Anspruch 4, wobei die Spurwechselvorrichtung ferner dazu ausgelegt ist, den Spurwechsel der Fahrzeugkolonne mit dem ersten Fahrzeug (10) und dem weiteren Fahrzeug (20) zeitlich verzögert auszuführen, und wobei das letzte Fahrzeug der Fahrzeugkolonne den Spurwechsel als erstes ausführt.

7. Vorrichtung nach einem der Ansprüche 1 bis 6, mit einer Signalisierungsvorrichtung (15),
wobei die Übertragungsvorrichtung (11) ferner dazu ausgelegt ist, eine Anforderung für eine Unterbrechung einer Fahrzeugkolonne zwischen dem ersten Fahrzeug (10) und dem weiteren Fahrzeug (20) zu empfangen; und
wobei die Signalisierungsvorrichtung (15) dazu ausgelegt ist, eine Signalisierung für eine Unterbrechung in der Fahrzeugkolonne auszugeben.

8. Vorrichtung nach Anspruch 7, mit einer Steuervorrichtung (16), die dazu ausgelegt ist, eine Geschwindigkeit des ersten Fahrzeugs (10) oder des weiteren Fahrzeugs (20) zu verringern, wenn eine vorbestimmte Zeitspanne nach der Signalisierung für eine Unterbrechung in der Fahrzeugkolonne verstrichen ist.

9. Verfahren zur Steuerung einer automatischen Kolonnenfahrt einer Fahrzeugkolonne mit einem ersten Fahrzeug (10) und mindestens einem weiteren Fahrzeug (20), mit den Schritten:
Bestimmen (S1) von Routeninformationen des ersten Fahrzeugs (10);
Empfangen (S2) von Routeninformationen des weiteren Fahrzeugs (20);
Ermitteln (S3) einer gemeinsamen Teilroute des ersten Fahrzeugs (10) und des weiteren Fahrzeugs (20) basierend auf den Routeninformationen des ersten Fahrzeugs (10) und den Routeninformationen des weiteren Fahrzeugs (20); und
Ausgeben (S4) von Informationen über das weitere Fahrzeug (20) in dem ersten Fahrzeug (10), wenn eine gemeinsame Teilroute des ersten Fahrzeugs (10) und des weiteren Fahrzeugs (20) ermittelt worden ist.

10. Verfahren nach Anspruch 9, mit einem Schritt zum Bestimmen einer Reihenfolge in der Fahrzeugkolonne basierend auf den Routeninformationen des ersten Fahrzeugs (10) und den Routeninformationen des weiteren Fahrzeugs (20).

11. Verfahren nach Anspruch 9 oder 10, mit den Schritten:
Empfangen eine Anforderung für einen Wechsel der Fahrspur einer Fahrzeugkolonne mit dem ersten Fahrzeug (10) und dem weiteren Fahrzeug (20), nachdem aus dem ersten Fahrzeug (10) und dem weiteren Fahrzeug (20) eine Fahrzeugkolonne gebildet worden ist;
Detektieren eines Objekts in der Fahrspur, auf die gemäß der Anforderung für einen Wechsel der Fahrspur gewechselt werden soll, durch das erste Fahrzeug (10) und das weitere Fahrzeug (20); und
Freigeben des Wechsels der Fahrspur, wenn in der Fahrspur, auf die gewechselt werden soll, wenn in dem ersten Fahrzeug (10) und dem weiteren Fahrzeug (20) kein Objekt auf der Fahrspur, auf die gewechselt werden soll, worden ist.

12. Verfahren nach Anspruch 10, wobei das jeweils hintere Fahrzeug einer Fahrzeugkolonne mit dem ersten Fahrzeug (10) und dem weiteren Fahrzeug (20) die Fahrspur zuerst wechselt.

13. Verfahren nach Anspruch 10, alle Fahrzeuge einer Fahrzeugkolonne mit dem ersten Fahrzeug (10) und dem weiteren Fahrzeug (20) die Fahrspur gleichzeitig wechseln.

14. Verfahren nach Verfahren nach einem der Ansprüche 9 bis 13, mit den Schritten:
Empfangen eine Anforderung für eine Unterbrechung der Fahrzeugkolonne zwischen dem ersten Fahrzeug und dem weiteren Fahrzeug;
Ausgeben einer Signalisierung für die Unterbrechung der Fahrzeugkolonne zwischen dem ersten Fahrzeug (10) und dem weiteren Fahrzeug (20).

15. Verfahren nach Anspruch Fischer 14, wobei das Ausgeben der Signalisierung für die Unterbrechung eine optische, akustische und/oder haptische Signalisierung umfasst.
